(19) Europäisches Patentamt / European Patent Office / Office européen des brevets

(11) **EP 4 241 915 A1**

(12) **EUROPEAN PATENT APPLICATION**
published in accordance with Art. 153(4) EPC

(43) Date of publication:
**13.09.2023 Bulletin 2023/37**

(21) Application number: **21887984.9**

(22) Date of filing: **07.01.2021**

(51) International Patent Classification (IPC):
**B23K 37/00** (2006.01)    **B23K 37/02** (2006.01)
**B25J 9/16** (2006.01)    **B25J 11/00** (2006.01)

(86) International application number:
**PCT/CN2021/070578**

(87) International publication number:
**WO 2022/095278 (12.05.2022 Gazette 2022/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.11.2020 CN 202011239331**

(71) Applicants:
• **Jiangsu Automation Research Institute**
 **Lianyungang, Jiangsu 222061 (CN)**
• **Jiangsu Jari Group Co., Ltd.**
 **Lianyungang, Jiangsu 222023 (CN)**

(72) Inventors:
• **LIAO, Liangchuang**
 **Lianyungang, Jiangsu 222061 (CN)**
• **ZHANG, Benshun**
 **Lianyungang, Jiangsu 222061 (CN)**

• **SUN, Hongwei**
 **Lianyungang, Jiangsu 222061 (CN)**
• **LI, Mengmeng**
 **Lianyungang, Jiangsu 222061 (CN)**
• **HUA, Lei**
 **Lianyungang, Jiangsu 222061 (CN)**
• **CHEN, Weibin**
 **Lianyungang, Jiangsu 222061 (CN)**
• **CHEN, Yangyang**
 **Lianyungang, Jiangsu 222061 (CN)**
• **MA, Tao**
 **Lianyungang, Jiangsu 222061 (CN)**
• **YU, Rui**
 **Lianyungang, Jiangsu 222061 (CN)**
• **WANG, Chuansheng**
 **Lianyungang, Jiangsu 222061 (CN)**

(74) Representative: **Herrmann, Uwe**
 **Lorenz Seidler Gossel**
 **Rechtsanwälte Patentanwälte**
 **Partnerschaft mbB**
 **Widenmayerstraße 23**
 **80538 München (DE)**

(54) **QMIX REINFORCEMENT LEARNING ALGORITHM-BASED SHIP WELDING SPOTS COLLABORATIVE WELDING METHOD USING MULTIPLE MANIPULATORS**

(57) A qmix reinforcement learning algorithm-based ship welding spots collaborative welding method using multiple manipulators. The method comprises the following steps: a) building a reinforcement learning environment, and setting a welding area and an operation area in the environment; b) determining state values and action values of the manipulators; c) setting reward values according to the state values, the action values, and tasks of collaborative welding and collision avoidance; d) calculating a local action value function of each manipulator according to the state values and action values and by means of a recurrent neural network, and performing an action selection process; e) obtaining an overall action value function of all manipulators from the action value functions by means of a super-network set with non-negative weights; and f) constructing a loss function from the reward values of step c) and the overall action value function of step e), calculating and updating the weights of the neural network according to a back-propagation algorithm, and repeating the training process. The method does not depend on any system model, is simple and effective, and can implement tasks of collaborative welding of welding spots in obstacle environments.

FIG. 1

EP 4 241 915 A1

**EP 4 241 915 A1**

**Description**

**TECHNICAL FIELD**

The present disclosure belongs to the field of welding control, and particularly relates to a QMIX reinforcement learning algorithm-based ship welding spots collaborative welding method using multiple manipulators.

**BACKGROUND**

Welding robots account for more than half of all industrial robots in all walks of life around the world. Welding robots have evolved from arm robots for assembly lines at the beginning, to sensor-based off-line programmed welding robots, and to today's widely applicable multi-sensor intelligent welding robots with highly adaptive capabilities, their welding capabilities and automation levels are also improved rapidly. The use of welding robots in a large space such as a ship to weld multiple welds in complex scenes can greatly improve the welding efficiency and quality, and such technology has become a hot research topic today. It is an inevitable trend of future ship construction to put robots into the shipbuilding industry to partially replace or even completely replace manual welding, thereby realizing mechanized, automated, partially intelligentized or even fully intelligentized, as well as true "unmanned" shipbuilding (Yu Bujiang, "Research on Robot welding Process for cubicles in Cabins" [D], Jiangsu: Jiangsu University of Science and Technology, 2013).

Under complex task demands, the collaborative welding of multiple welding robots is of great significance to improve the welding efficiency and reduce the welding time. The main problems to be dealt with and studied in the welding of multiple robots may be divided into the following aspects: first, a problem of collaborative task assignment and path planning of multiple welding robots; second, a problem of mutual interference and collision between multiple robots during welding operations; and third, a problem of collaborative welding of robots that transmit information through sensing devices under communication limitation during operations. In response to the above three problems, domestic and foreign scholars have studied a variety of methods to solve them.

In the literature (Jing Fengshui, Tan Min, Hou Zengguang, Liang Zize, Wang Yunkuan, "Research on Kinematics and Docking Accuracy of Hull Segmented Docking System Based on Multi-robot Coordination", Robot, 2002(04): 324-328), Jing Fengshui et al., in response to a problem of kinematics and a docking accuracy of a hull segmented docking system based on multi-robot coordination, proposed a trajectory planning algorithm and a docking control scheme of robots, and discussed the influence of several error factors on the docking accuracy of the system. This method can ensure the hull segment docking accuracy. Gan, in the literature (Gan Y, Duan J, Chen M, Dai X, "Multi-Robot Trajectory Planning and Position/Force Coordination Control in Complex Welding Tasks", Applied Sciences, 2019, 9(5): 924.), in response to a problem of trajectory planning and position coordination control of a multi-robot system in a welding process, based on an object-oriented hierarchical planning control strategy, proposed a symmetrical internal and external adaptive variable impedance control for the position tracking of collaborative manipulators of multi-robots, which can complete welding tasks smoothly, and achieve good location tracking performances. The literatures above have solved the problem of collaborative welding path planning of multi-robots well but do not deal with the problems of interference between robots and sensor limitations.

In the literature (Chen Hui, "Research on Path Planning of Collaborative Welding of Multi-robots with White Body" [D], Shanxi: North University of China, 2019), Chen Hui analyzed and compared the advantages and disadvantages of commonly used path planning algorithms; in response to deficiencies of traditional ant colony algorithms, proposed a compound improved ant colony algorithm, which is applied to a problem of welding path planning of a single-robot and multi-robots; and in response to the problem of welding path planning of multi-robots, established a welding spot allocation model and an anti-interference model between robots, but sensor limitations are not taken into account in this literature. Considering that ship welding is a welding process in a large space, in the operation process of robots, global welding information cannot be obtained usually due to the limitation of performances of sensing devices, which will affect the accuracy of path planning and the effectiveness of interference resistance.

**SUMMARY**

An objective of the present present disclosure is to provide a QMIX reinforcement learning algorithm-based ship welding spots collaborative welding method using multiple manipulators, which is simple and effective, and can achieve reasonable planning of operating paths of manipulators and collision avoidance of the manipulators in a welding environment with task demands of welding spots collaborative welding and limited information sensing, and reduce the labor and time costs of production.

A technical solution to realize the objective of the present present disclosure is: a QMIX reinforcement learning algorithm-based ship welding spots collaborative welding method using multiple manipulators, which is applicable to

2

path planning and collision avoidance situations in a process of ship welding spots collaborative welding using multiple manipulators, and specifically includes the following steps:

Step (a): according to an actual scene of ship welding spots welding using multiple manipulators, building a reinforcement learning environment for ship welding spots collaborative welding using multiple manipulators, and setting and distinguishing a welding area and a manipulator operation area in the environment;
Step (b): according to the environment and the areas set in Step (a), constructing state values and action values of the manipulators in a reinforcement learning process;
Step (c): setting reward values for guiding the learning of the manipulators in the reinforcement learning process according to the stipulation of the state values and the action values in Step (b) and task demands of collaborative welding in an actual production;
Step (d): calculating a local action value function of each manipulator according to the state values and the action values set in Step (b) and by means of a recurrent neural network, and performing an action selection process;
Step (e): obtaining an overall action value function of all manipulators from the local action value function of each manipulator obtained in Step (d) by means of a super-network set with non-negative weights; and
Step (f): constructing a loss function from the reward values of Step (c) and the overall action value function network of Step (e), calculating and updating the weights of the neural network according to a back-propagation algorithm, and repeating the training process.

Further, the Step (a) specifically includes the following steps:

Step (a1): according to the actual scene of ship welding using multiple manipulators,
characterizing a cabin space based on a simulated welding environment in python software; and
Step (a2): according to the cabin space and the actual scene of welding, describing the positions of the manipulators and an area to be welded, and dividing the positions in the space.

Further, the Step (b) specifically includes the following steps:

Step (b1): stipulating the state values of the manipulators as reinforcement learning agents in the learning and training processes according to the simulated environment in Step (a); and
Step (b2): according to actual operation modes of the manipulators and the simulated environment, describing the action values of the manipulators as the reinforcement learning agents in the learning and training processes.

Further, the Step (c) specifically includes the following steps:

Step (c1): analyzing the task demands of the actual scene of welding, and giving a collaborative welding target that needs to be achieved; and
Step (c2): characterizing the target described in Step (c1) as a reward value form of the reinforcement learning process.

Further, the Step (d) specifically includes the following steps:

Step (d1): constructing a recurrent neural network with the state values and the action values as inputs and the action value functions as outputs;
Step (d2): by taking the state values and the action values obtained, respectively, in Step (bl) and Step (b2) as inputs, obtaining a local action value function of each manipulator by means of the recurrent neural network of Step (d1); and
Step (d3): according to the local action value function of each manipulator obtained in Step (d1), selecting the action of each manipulator at the next moment based on an epsilon-greedy strategy.

Further, the Step (e) specifically includes the following steps:

Step (e1): constructing a super-network set with non-negative weights and with the local action value functions as inputs and the overall value function as an output; and
Step (e2): taking the local action value functions obtained in Step (d2) as inputs, and substituting the local action value functions into the neural network constructed in Step (e1) to obtain the overall action value function.

Further, the Step (f) specifically includes the following steps:

Step (f1): constructing a loss function from the reward values of Step (c2) and the overall action value function of Step (e2); and

Step (f2): calculating and updating the weights of the neural network according to a back-propagation algorithm, and repeating the training process.

Compared with the prior art, the present present disclosure has the following significant advantages:

the method is simple and effective, and can achieve reasonable planning of operating paths of manipulators and collision avoidance of manipulators in a welding environment with task demands of welding spots collaborative welding and limited information sensing, and reduce the labor and time costs of production.

## BRIEF DESCRIPTION OF THE DRAWINGS

FIG 1 shows a scene of welding assembly parts.

FIG 2 shows a python software based simulated welding grid world according to the present present disclosure.

FIG 3 shows a schematic diagram of a simulated welding environment of two manipulators based on python software.

FIG 4 shows a partial observation of a manipulator.

FIG 5 shows a potential collision scene of two manipulators in the simulated environment.

FIG 6 shows a basic recurrent neural network.

FIG 7 shows an expanded view of the recurrent neural network at three moments.

FIG 8 shows a super-network for calculation of an overall action value function.

FIG 9 shows a flowchart of a QMIX reinforcement learning algorithm-based ship welding spots collaborative welding method using multiple manipulators.

$$\begin{bmatrix} O_{agt_{i1}} & O_{agt_{i2}} & O_{agt_{i3}} \\ O_{agt_{i4}} & O_{agt_{i5}} & O_{agt_{i6}} \\ O_{agt_{i7}} & O_{agt_{i8}} & O_{agt_{i9}} \end{bmatrix}$$

In the pictures above: $\begin{bmatrix} \end{bmatrix}$ : an observation space of a manipulator centered on $O_{agt_{is}}$, where $O_{agt_{ij}}$ $j=1, 2, 3, 4, 5, 6, 7, 8, 9$ is observation information of a j-th grid; $x$: an input layer of the recurrent neural network; $s$: a hidden layer of the recurrent neural network; $o$: an output layer of the recurrent neural network; $U$: a weight from the *input* layer to the hidden layer of the recurrent neural network; $W$: a weight between the hidden layers of the recurrent neural network; $V$: a weight from the hidden layer to the output layer of the recurrent neural network; $x_{t-1}$: an input layer of the recurrent neural network at moment t-1; $s_{t-1}$: a hidden layer of the recurrent neural network at moment t-1; $o_{t-1}$: an output layer of the recurrent neural network at moment t-1; $x_{t+1}$: an input layer of the recurrent neural network at moment t+1; $s_{t+1}$: a hidden layer of the recurrent neural network at moment t+1; $o_t+1$: an output layer of the recurrent neural network at moment t+1; $q_1$ is a local action value function of a first manipulator; $q_2$ is a local action value function of a second manipulator; $W_2$: a weight of the super-network; $s_{total}$: global state information; and $q_{total}$ is an overall action value function.

## DETAILED DESCRIPTION OF THE EMBODIMENTS

The present present disclosure will be described in further detail below with reference to the drawings.

The present present disclosure provides a QMIX reinforcement learning algorithm-based ship welding spots collaborative welding method using multiple manipulators, which is especially applicable to welding environments including collaborative welding demands, limited sensing information, collision avoidance and the like. First, two manipulators $J_1$ and $J_2$ are considered to perform collaborative welding learning in a 20x20 grid world, and the environment is modeled in a python software. According to an actual welding scene, independent welding areas with sizes of 2x4 and 2x10 respectively and a collaborative welding area with a size of 2x8 are established, where the starting coordinates of the areas in the grid world are ((4,9), (5,9)), ((9,6), (10,6)), ((16,8), (17,8)), respectively.

During the learning and training processes of the two manipulators $J_1$ and $J_2$, due to the limitation of information exchange devices such as sensors, each of the manipulators can only obtain information $o_{agt_i}$ of a 3x3 range grid centered on itself, but cannot obtain global state information $s_{agt_i}$, for example, the specific location of a welding area outside this range cannot be obtained.

For the actions of the two manipulators $a_{agt_i}$, in addition to the basic four directions, i.e., up, down, left and right directions, and stillness, there are also some restrictions on the actions of the manipulators. When the manipulators enter a welding area, since the manipulators can successfully complete the welding of an area part including welding spots after finding the accurate welding spots during actual welding, in a corresponding simulated environment, after a manipulator reaches an initial point of a certain welding area, the action of the manipulator is limited to only being able to perform in a direction in which the welding is completed, and cannot leave the welding area.

The setting of reward values r of the manipulators in a learning environment can guide a learning process of the manipulator correctly. First of all, for the demands of collaborative welding, in a collaborative welding area, both two manipulators need to reach an initial welding area of the collaborative welding area, and after the welding of the collaborative welding area is completed, the two manipulators can get a common reward value of +500. In addition, for a collision avoidance situation, it is stipulated that when two manipulators are within a one-grid range, once the coordinate positions of the two manipulators after taking action overlap, that is, a collision occurs, the two manipulators will receive a penalty value of -500 together, which is intended to prevent the manipulators from colliding again during subsequent learning and training processes. The two manipulators, after completing all tasks in the welding area together, will receive a reward value of +2000 to encourage them for collaboratively completing the welding task.

After the above stipulations are made on the state value, action value and reward value of the learning process of the manipulator, the learning process of the manipulator in the environment can be trained using the QMIX algorithm.

A local action value function $q_i$ of each manipulator is obtained from its own actions $a_{agt_i}$ and observation values $o_{agt_i}$ and by means of a recurrent neural network. The selection of each manipulator for its own action is also based on the local action value function output by such a recurrent neural network. According to an epsilon-greedy strategy, under a current observation, the manipulator has a probability of $\varepsilon$ to select an action $a_{agt_i\_max}$ corresponding to a largest $q_{i\_max}$ value in all feasible actions; and at the same time, the manipulator also has a probability of $1-\varepsilon$ to select an action corresponding to any other non-maximum values as the action at the current moment. According to such a strategy, each manipulator can select a more reasonable action after a better value function is learned.

It is stipulated in the QMIX algorithm that each manipulator performs action selection according to its own action value function, but at the same time, it also needs to learn an overall action value function $q_{total}$ of all manipulators. The overall action value function $q_{total}$ can be obtained from the local action value function of each agent by means of a super-network set with non-negative weights. A loss function $L(\theta)$ for updating the action value function can be constructed from $q_{total}$ and the reward value r, where $\theta$ is a parameter containing weights U, V and W of the neural network. According to the back-propagation algorithm, the loss function can be minimized, and the weights of the neural network can be calculated and updated. The repetition of the steps above and the training process are continually performed on the neural network with updated weights, so that finally, a result that approximately converges to an optimal value can be obtained. Accordingly, the training and learning processes of the QMIX reinforcement learning algorithm-based ship welding spots collaborative welding using multiple manipulators is completed.

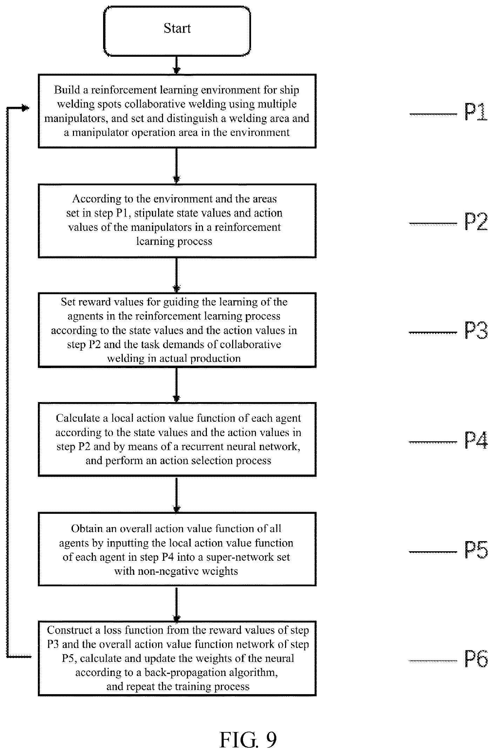

FIG 9 is a design flowchart of the present present disclosure, which consists of steps P1-P6, and each step is described as follows:

(1) Step P1

The present present disclosure is a QMIX reinforcement learning algorithm-based ship welding spots collaborative welding method using multiple manipulators. Therefore, it is necessary to build a reinforcement learning environment for ship welding spots collaborative welding using multiple manipulators and set an area to be welded and a manipulator operation area according to an actual 40-point welding demand of ship collaborative welding using multiple manipulators. The specific implementation steps are as follows:

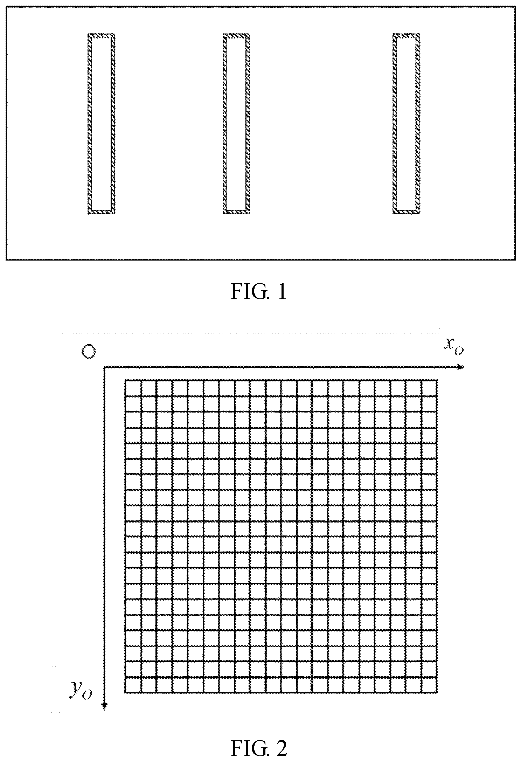

step 1: according to an actual scene of ship welding shown in FIG 1, a ship welding task is mainly to weld a strip-shaped area to be welded in the figure by manipulating manipulators in a welding cabin. Therefore, a cabin space of a simulated welding environment shown in FIG 2 can be characterized by using a cv library in python software.

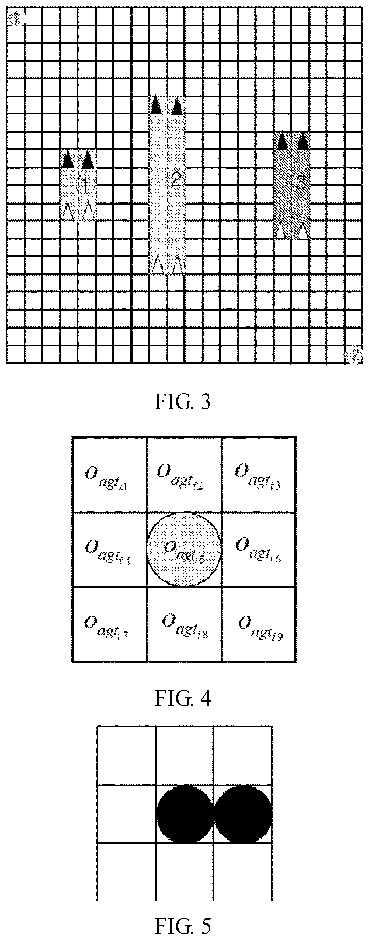

The entire welding cabin is built on a plane rectangular coordinate system, an upper left corner of the entire welding cabin is an origin, a horizontal rightward direction is an x-axis, and a vertical downward direction is a y-axis. Corresponding 20x20 equally-divided white grids in the entire plane represent cabins in an actual welding environment; and step 2: the area to be welded in FIG 1 is usually composed of three parts as shown in the figure, and the completion of welding of all the three parts is counted as the completion of welding of the area. Therefore, the manipulators and the welding areas are set as follows: the manipulators are represented by circles labeled I and II in FIG 3, the initial positions of the manipulators are located at both ends of the entire plane, and the coordinates are respectively $(x_{o_1}, y_{o_1})$ and $(x_{o_2}, y_{o_2})$. The welding areas are expressed as follows: the two parts with sizes of 2x4 and 2x10 respectively, which are areas labeled "①" and "②" respectively (hereinafter referred to as welding area 1 and welding area 2 respectively), represent two areas to be welded with different sizes, each of the two areas to be welded has two sides required to be welded (that is, each of the 1x4 and 1x10 areas separated by a dotted line is one side, and the 2x4 and 2x10 areas represent both sides of a welding area), and a single manipulator can complete the welding of two sides in any area. When this area is welded with a single manipulator, it needs to start welding from a starting position (black triangle) and end the welding at an end position (white triangle). A 2x8 area labeled "(3)" (hereinafter referred to as welding area 3) indicates an area to be welded that needs to be subjected to collaborative welding by means of two manipulators, that is, both the two manipulators need to be at the starting welding position of 1x8 on each side (at the black triangle position) before welding can begin in that area, and welding ends at the end position (at the white triangle position).

(2) Step P2

In step P2, according to the simulated environment and the welding areas set in step P1, state values and action values of the manipulators in a reinforcement learning process are further stipulated. The specific implementation steps are as follows: step 1: the setting of the state values: for non-partial observations, the state value $s_{agt_i}$ of an i-th manipulator is the coordinates $s_{agt_i} = (x_{o_i}, y_{o_i})$ thereof. However, considering that scenes in the actual welding environment are relatively large, the manipulator is usually limited by communication and the performances of sensor devices and the like during a welding process, and thus can only obtain information within a certain range near the manipulator, but cannot accurately obtain global status information, therefore, some observations should be taken into account in the setting of the state value here. At this time, it is stipulated that in the grid world, each manipulator can only obtain the information of a nearby 3x3 grid centered on itself (as shown in FIG 4), and when accurate state values (coordinates)

$$o_{agt_i} = \begin{bmatrix} o_{agt_{i1}} & o_{agt_{i2}} & o_{agt_{i3}} \\ o_{agt_{i4}} & o_{agt_{i5}} & o_{agt_{i6}} \\ o_{agt_{i7}} & o_{agt_{i8}} & o_{agt_{i9}} \end{bmatrix}$$

cannot be obtained, the observation value of the i-th manipulator is expressed as ,
and centered on the position $o_{agt_{is}} = (x_{o_i}, y_{o_i})$ of the manipulator (a gray circle in the figure), coordinate information relative to the rest of grids are obtained. For example, the coordinate information of $o_{agt_1}$ can be expressed as $o_{agt_{i1}} = (x_{o_i} - 1, y_{o_i} - 1)$. In addition to obtaining the coordinate information of nearby grids, the manipulator can also obtain corresponding environmental information on these grids. For example, when a starting weld on the left side of the welding area 1 is on a $o_{agt_{i1}}$ grid, the manipulator can know the relative position information of the manipulator and the starting weld on the left side of the welding area 1 at the current position during the learning process, and then judge the current position. step 2: the setting of the action values: a motion action $a_{agt_i}$ of the manipulator can be roughly divided into five actions: up, down, left, right and still actions, corresponding to $(u_1, u_2, u_3, u_4, u_5)$ respectively. Where, considering an actual situation, there are also the following restrictions on the action in the learning environment: (1) when the manipulator moves around a wall (corresponding to a boundary part of the grid), the action is limited to, when a selected action is about to collide with the wall, an actual action is stationary, for example, when the manipulator selects an action $u_3$ to move to the left at the left boundary, an actual result of this action is to make the manipulator stationary; and (2) after the manipulator successfully finds and enters the initial welding position of the area to be welded, the action of the manipulator is limited to that the manipulator can only move in the direction of continuing to complete the welding, for example, when some manipulator is located at the starting welding position on the left side of welding area 1, the manipulator can only move in a downward direction to complete the welding until the welding of the 1x4 area is completed, no matter which $a_{agt_i}$ is selected, the final actual action is $a_{agt_i} = u_2$. This is because in actual situations, a welding manipulator after finding a starting point of welding can directly complete the welding of this part without additional learning of this process.

(3) Step P3

In step P3, reward values for guiding the learning of the manipulators in the reinforcement learning process are set according to the stipulation of the state values and the action values in step P2 and the task demands of collaborative welding in actual production. The design is implemented in the following steps:

step 1: the analysis of a task demand of the actual welding scene includes three points. The first is that a task requires the manipulator to complete the welding of all areas to be welded in as few steps as possible, that is, in the shortest operating time possible; the second is that the manipulator avoids colliding with any boundaries and other manipulators possible in a welding operation process; and the third is that the manipulator should complete the welding task under the requirements of embodying the collaboration of the manipulators.

step 2: based on the above analysis, the set reward value r needs to include the following aspects. (1) Considering that the overall target of this solution is to complete all welding tasks in the shortest possible time, that is, in correspondence to a discrete environment, the total number of motion steps of the manipulator is the least, setting the reward value of each step to -1 means that when the number of steps required for the manipulator to complete welding in all areas is greater, the total reward value will be smaller, that is, the manipulator is encouraged to complete all welding tasks in as few steps as possible. (2) When the manipulator performs welding, that is, when the action of each step is fixed to advance along the welding direction, the reward for each step is 0, which means that there is no penalty or reward for extra steps, so that the manipulator can achieve the welding target smoothly. (3) For a non-collaborative welding area, some manipulator will get a reward value of +200 after completing a welding task in the area; and for a collaborative welding area, since welding can only start when two manipulators are both located at the initial welding position of the area, the two manipulators will get a reward value of +500 after both entering the initial welding position of the area and completing the welding of the area. It should be noted that during a learning process, the manipulator will make decisions based on the guidance of the reward value and continuously update the decisions in persuit of a maximum accumulated reward value, so there is no need to additionally stipulate the reward value of the welding sequence of the manipulator, because the manipulator has been continuously updating and optimizing its welding sequence decision during the learning process. (4) Collision avoidance: according to a relative distance between two manipulators (when the two manipulators can be observed within an observation range), when the centers of the two manipulators are within a distance of one grid (as shown by two black circles in FIG 5), the two manipulators, when selecting actions of reducing a relative distance, will receive a collision penalty value of -500, directly end a segment of the learning process, and return to the initial position and start learning again. Considering that the collision of two manipulators in actual production will bring great losses to the production cost and the production efficiency, collisions are something trying hard to avoid during training. (5) Task completion: two manipulators, when having completed welding on all the areas to be welded, will receive a reward value of +2000, and end the learning process.

(4) Step P4

In step P4, a local action value function of each manipulator is calculated according to the state values and the action values set in step P2 and by means of a recurrent neural network, and an action selection process is performed. The design is implemented in the following steps:

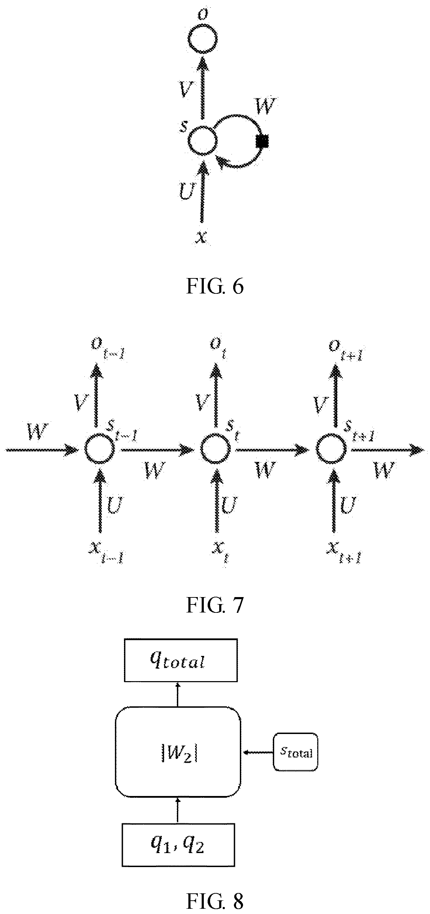

step 1: a recurrent neural network as shown in FIG 6 is constructed. Where, $x$ represents an input layer, $s$ represents a hidden layer, and $°$ represents an output layer. U, W and V represent weights from the input layer to the hidden layer, between the hidden layers, and from the hidden layer to the output layer, respectively. Since the recurrent neural network is made for sequential decisions, the neural network at a single moment (indicated by a subscript $t$) in FIG 6 is expanded is expanded into a form of FIG 7, so that the structure of the neural network at three moments including the previous moment (indicated by a subscript t-1) and the next moment (indicated by a subscript t+1) is obtained. The information of the hidden layer at moment t is not only determined by the input x at the current moment in a process of updating, but also determined by the information $s_{t-1}$ of the hidden layer at the previous moment, in correspondence to a problem of partial observations, since the manipulator cannot obtain accurate position information during the learning process, it is very important to obtain the observation information of the previous moment together as the observation value of the current moment, which can greatly improve the accuracy of determining the current real position of the manipulator.

Step 2: When the manipulator obtains certain initial observation information $o_{agt_i0}$ and takes an action $a_{agt_i0}$, after $(o_{agt_i0}, a_{agt_i0})$ is input into the neural network constructed in step 1, a corresponding local action value function value $q_{i0}(o_{agt_i0}, a_{agt_i0})$ of the manipulator is obtained.

Step 3: after a certain manipulator obtains an observation $o_{agt_i}$, an action selection is performed according to the

action value function $q_i$ of all feasible actions under the current observation and an epsilon-greedy strategy. That is, under the current observation, the manipulator has a probability of ε to select an action $a_{agti\_max}$ corresponding to a largest $q_{i\_max}$ value in all feasible actions; and at the same time, the manipulator also has a probability of 1-ε to select an action corresponding to any other non-maximum values as the action at the current moment.

(5) Step P5

In step P5, an overall action value function of all manipulators is obtained from the local action value function of each manipulator obtained in step P4 by means of a fully-connected neural network set with non-negative weights. The specific implementation steps are as follows:

step 1: a super-network is constructed, and the following conditions are satisfied: the weights of the neural network are all non-negative numbers. According to the requirements of the QMIX algorithm, the overall action value function $q_{total}$ and the local action value function $q_i$ need to satisfy the following monotonicity constraints:

$$\frac{\partial q_{total}}{\partial q_i} \geq 0, \mathrm{i} = 1, 2$$

In order to achieve the above requirements, the structure of the constructed super-network is shown in FIG 8. Where $|W_2|$ represents a non-negative weight of the neural network from the input $q_i$ to the output $q_{total}$, and $s_{total}$ is a global state. It is worth noting that in the process that each manipulator performs its own action selection and state transition, the global state cannot be directly utilized, but instead the observation value of each manipulator based on its own observation range. The global state information is only used when the overall action value function is trained and updated, therefore, for the manipulator, the learning environment therefor is still a partially observed environment, rather than an environment that can utilize the global state.

Step 2: the local action value function value $q_i(o_{agti}, a_{agti})$ of the manipulator obtained in step P4 is input into the super-network constructed in the previous step, so that an overall action value function $q_{total}$ can be obtained.

(6) Step P6

In step P6, a loss function is constructed from the reward values r of step P3 and the overall action value function $q_{total}$ obtained in step P5, and the weights of the neural network are calculated and updated according to a back-propagation algorithm. The specific implementation steps are as follows:

step 1: the minimization of the loss function is usually taken as the main means of the training of the neural network. Combined with the QMIX algorithm and the construction of the method, the main purpose is to minimize the following loss functions:

$$L(\theta) = \sum_{i=1}^{b} [(r + \gamma \max_{a'_{agt_i}} q_{total}(o'_{agt_i}, a'_{agt_i}, s'_{agt_i}; \theta^-) - q_{total}(o_{agt_i}, a_{agt_i}, s_{agt_i}; \theta))^2]$$

Where $\gamma$ is an update rate, $o'_{agt_i}, a'_{agt_i}, s'_{agt_i}$ represent an observation value, an action value and a state value used as target values for calculation at the next moment, respectively, and θ and θ⁻ are weight parameters of an estimated neural network for calculating the action value function at the current moment and a target neural network for calculating the action value function at the next moment, respectively.

Step 2: according to the back-propagation algorithm, the weights U, V and W of the neural network can be calculated, and then the update of the parameters θ and θ⁻ can be obtained. Where, the parameters θ and θ⁻ are parameter vectors including the weights U, V, W of the neural network. The repetition of the steps above and the training process are continually performed on the neural network with updated weights, so that finally, a result that approximately converges to an optimal value can be obtained. Thus, the training and learning processes of the QMIX reinforcement learning algorithm-based ship welding spots collaborative welding using multiple manipulators is completed.

**Claims**

1. A QMIX reinforcement learning algorithm-based ship welding spots collaborative welding method using multiple manipulators, wherein the method is applicable to path planning and collision avoidance situations in a process of ship welding spots collaborative welding using multiple manipulators, and specifically comprises the following steps:

   Step (a): according to an actual scene of ship welding spots welding using multiple manipulators, building a reinforcement learning environment for ship welding spots collaborative welding using multiple manipulators, and setting and distinguishing a welding area and a manipulator operation area in the environment;
   Step (b): according to the environment and the areas set in Step (a), constructing state values and action values of the manipulators in a reinforcement learning process;
   Step (c): setting reward values for guiding the learning of the manipulators in the reinforcement learning process according to the stipulation of the state values and the action values in Step (b) and the task demands of collaborative welding in actual production;
   Step (d): calculating a local action value function of each manipulator according to the state values and the action values set in Step (b) and by means of a recurrent neural network, and performing an action selection process;
   Step (e): obtaining an overall action value function of all manipulators from the local action value function of each manipulator obtained in Step (d) by means of a super-network set with non-negative weights; and
   Step (f): constructing a loss function from the reward values of Step (c) and the overall action value function network of Step (e), calculating and updating the weights of the neural network according to a back-propagation algorithm, and repeating the training process.

2. The method according to claim 1, wherein the Step (a) specifically comprises the following steps:

   Step (a1): according to the actual scene of ship welding using multiple manipulators, characterizing a cabin space based on a simulated welding environment in python software; and
   Step (a2): according to the cabin space and the actual scene of welding, describing the positions of the manipulators and an area to be welded, and dividing the positions in the space.

3. The method according to claim 2, wherein the Step (b) specifically comprises the following steps:

   Step (b1): stipulating the state values of the manipulators as reinforcement learning agents in the learning and training processes according to the simulated environment in step a); and
   Step (b2): according to actual operation modes of the manipulators and the simulated environment, describing the action values of the manipulators as the reinforcement learning agents in the learning and training processes.

4. The method according to claim 3, wherein the Step (c) specifically comprises the following steps:

   Step (c1): analyzing the task demands of the actual scene of welding, and giving a collaborative welding target that needs to be achieved; and
   Step (c2): characterizing the target described in Step (c1) as a reward value form of the reinforcement learning process.

5. The method according to claim 4, wherein the Step (d) specifically comprises the following steps:

   Step (d1): constructing a recurrent neural network with the state values and the action values as inputs and the action value functions as outputs;
   Step (d2): by taking the state values and the action values obtained, respectively, in Step (bl) and Step (b2) as inputs, obtaining a local action value function of each manipulator by means of the recurrent neural network of Step (d1); and
   Step (d3): according to the local action value function of each manipulator obtained in Step (d1), selecting the action of each manipulator at the next moment based on an epsilon-greedy strategy.

6. The method according to claim 5, wherein the Step (e) specifically comprises the following steps:

   Step (e1): constructing a super-network set with non-negative weights and with the local action value function as an input and the overall value function as an output; and

Step (e2): taking the local action value functions obtained in Step (d2) as inputs, and substituting the local action value functions into the neural network constructed in Step (e1) to obtain the overall action value function.

7. The method according to claim 6, wherein the Step (f) specifically comprises the following steps:

Step (f1): constructing a loss function from the reward values of Step (c2) and the overall action value function of Step (e2); and
Step (f2): calculating and updating the weights of the neural network according to a back-propagation algorithm, and repeating the training process.

FIG. 1

FIG. 2

FIG. 3

FIG. 4

FIG. 5

FIG. 6

FIG. 7

FIG. 8

Start

| Build a reinforcement learning environment for ship welding spots collaborative welding using multiple manipulators, and set and distinguish a welding area and a manipulator operation area in the environment | —— P1 |

| According to the environment and the areas set in step P1, stipulate state values and action values of the manipulators in a reinforcement learning process | —— P2 |

| Set reward values for guiding the learning of the agnents in the reinforcement learning process according to the state values and the action values in step P2 and the task demands of collaborative welding in actual production | —— P3 |

| Calculate a local action value function of each agent according to the state values and the action values in step P2 and by means of a recurrent neural network, and perform an action selection process | —— P4 |

| Obtain an overall action value function of all agents by inputting the local action value function of each agent in step P4 into a super-network set with non-negative weights | —— P5 |

| Construct a loss function from the reward values of step P3 and the overall action value function network of step P5, calculate and update the weights of the neural according to a back-propagation algorithm, and repeat the training process | —— P6 |

FIG. 9

## INTERNATIONAL SEARCH REPORT

| International application No. |
|---|
| **PCT/CN2021/070578** |

### A. CLASSIFICATION OF SUBJECT MATTER

B23K 37/00(2006.01)i; B23K 37/02(2006.01)i; B25J 9/16(2006.01)i; B25J 11/00(2006.01)i

According to International Patent Classification (IPC) or to both national classification and IPC

### B. FIELDS SEARCHED

Minimum documentation searched (classification system followed by classification symbols)

B23K, B25J

Documentation searched other than minimum documentation to the extent that such documents are included in the fields searched

Electronic data base consulted during the international search (name of data base and, where practicable, search terms used)

CNABS, CNKI, DWPI, SIPOABS, QMIX, 强化, 学习, 算法, 船舶, 机械臂, 焊接, 协同, 路径, 规划, 避碰, 壁障, 环境, 状态值, 动作值, 函数, intensify, study, arithmetic, ship, mechanical, arm, welding, synergy, path, plan, avoid, enviroment, status, value, operate, function.

### C. DOCUMENTS CONSIDERED TO BE RELEVANT

| Category* | Citation of document, with indication, where appropriate, of the relevant passages | Relevant to claim No. |
|---|---|---|
| A | CN 107102619 A (FANUC CORPORATION) 29 August 2017 (2017-08-29) see description, paragraphs 30-90, figures 1-9 | 1-7 |
| A | CN 110390845 A (BEIJING JINGDONG SHANGKE INFORMATION TECHNOLOGY CO., LTD. et al.) 29 October 2019 (2019-10-29) see description, paragraphs 53-116, figures 1-4 | 1-7 |
| A | CN 106681149 A (ZHEJIANG UNIVERSITY) 17 May 2017 (2017-05-17) see entire document | 1-7 |
| A | CN 110977967 A (TIANJIN BONUO INTELLIGENT CREATIVE ROBOTICS TECHNOLOGY CO., LTD.) 10 April 2020 (2020-04-10) see entire document | 1-7 |
| A | EP 0477430 A1 (KOBE STEEL LTD.) 01 April 1992 (1992-04-01) see entire document | 1- |
| A | JP 08190432 A (ATR NINGEN JOHO TSUSHIN KENKYU) 23 July 1996 (1996-07-23) see entire document | 1-7 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| | **12 August 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/070578** |

| Patent document cited in search report | | | Publication date (day/month/year) | Patent family member(s) | | | Publication date (day/month/year) |
| --- | --- | --- | --- | --- | --- | --- | --- |
| CN | 107102619 | A | 29 August 2017 | JP | 2017146879 | A | 24 August 2017 |
| | | | | DE | 102017001290 | A1 | 24 August 2017 |
| | | | | JP | 6114421 | B1 | 12 April 2017 |
| | | | | US | 2017243135 | A1 | 24 August 2017 |
| CN | 110390845 | A | 29 October 2019 | | None | | |
| CN | 106681149 | A | 17 May 2017 | CN | 106681149 | B | 19 November 2019 |
| CN | 110977967 | A | 10 April 2020 | | None | | |
| EP | 0477430 | A1 | 01 April 1992 | JP | H02254503 | A | 15 October 1990 |
| | | | | EP | 0477430 | B1 | 28 August 1996 |
| | | | | DE | 4031033 | A1 | 02 April 1992 |
| JP | 08190432 | A | 23 July 1996 | JP | H08190432 | A | 23 July 1996 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YU BUJIANG.** Research on Robot welding Process for cubicles in Cabins. Jiangsu University of Science and Technology, 2013
- **JING FENGSHUI ; TAN MIN ; HOU ZENGGUANG ; LIANG ZIZE ; WANG YUNKUAN.** Research on Kinematics and Docking Accuracy of Hull Segmented Docking System Based on Multi-robot Coordination. *Robot,* 2002, vol. 04, 324-328

- **GAN Y ; DUAN J ; CHEN M ; DAI X.** Multi-Robot Trajectory Planning and Position/Force Coordination Control in Complex Welding Tasks. *Applied Sciences,* 2019, vol. 9 (5), 924
- **CHEN HUI.** Research on Path Planning of Collaborative Welding of Multi-robots with White Body. North University of China, 2019